# EUROPÄISCHE PATENTSCHRIFT

(11) **EP 4 247 615 B1**
(45) Veröffentlichungstag und Bekanntmachung des Hinweises auf die Patenterteilung: **14.05.2025**
(21) Anmeldenummer: 21802673.0
(22) Anmeldetag: 29.10.2021
(51) Int. Cl.: B29C 48/92, B29C 48/09, B29C 48/88, G01B 11/24, G01N 21/3581

(54) **VERFAHREN ZUM ERMITTELN EINES ABSACKENS VON SCHMELZE EINES IN EINER EXTRUSIONSVORRICHTUNG EXTRUDIERTEN ROHRS**
METHOD FOR DETERMINING SAGGING OF THE MOLTEN MASS OF AN EXTRUDED TUBE IN AN EXTRUSION DEVICE
PROCÉDÉ DE DÉTERMINATION DE L'AFFAISSEMENT D'UNE MASSE FONDUE D'UN TUBE EXTRUDÉ DANS UN DISPOSITIF D'EXTRUSION

(30) Priorität: 17.11.2020 DE 102020130298; 23.11.2020 DE 102020130903
(43) Veröffentlichungstag der Anmeldung: 27.09.2023
(73) Patentinhaber: SIKORA AG, 28307 Bremen (DE)
(72) Erfinder: SIKORA, Harald, 28357 Bremen (DE)
(74) Vertreter: Hauck Patentanwaltspartnerschaft mbB
(86) Internationale Anmeldenummer: PCT/EP2021/080214
(87) Internationale Veröffentlichungsnummer: WO 2022/106180

(56) Entgegenhaltungen:
- EP-A1- 2 752 287
- WO-A1-2016/139155
- WO-A1-2019/086081
- DE-A1- 102015 122 205
- DE-U1- 202018 006 144
- J. HAUCK ET AL: "Terahertz inline wall thickness monitoring system for plastic pipe extrusion", AIP CONFERENCE PROCEEDINGS, 1 January 2014 (2014-01-01), NEW YORK, US, pages 86 - 89, XP055648302, ISSN: 0094-243X, DOI: 10.1063/1.4873740

## Beschreibung

Die Erfindung betrifft ein Verfahren zum Ermitteln eines Absackens von Schmelze eines in einer Extrusionsvorrichtung extrudierten Rohrs.

In Extrusionsvorrichtungen werden beispielsweise Kunststoffrohre extrudiert, wobei die aus der Extrusionvorrichtung austretenden Rohre regelmäßig entlang ihrer Längsrichtung gefördert werden. Dabei durchlaufen sie in der Regel mehrere Abkühlstrecken, in denen zur Abkühlung der Rohre eine Kühlflüssigkeit, beispielsweise Wasser, auf die Rohraußenfläche gesprüht wird. Unmittelbar nach Austritt aus der Extrusionsvorrichtung ist die Schmelze der extrudierten Rohre noch über weite Bereiche fließfähig, also noch nicht verfestigt. Im Zuge des Abkühlvorgangs, verstärkt durch die Abkühlstrecken, erkalten die Rohre bis zur vollständigen Aushärtung bzw. Verfestigung.

Aus WO 2016/139155 A1 ist ein Verfahren zum Messen des Durchmessers und/oder der Wanddicke eines Rohrs mittels Terahertzstrahlung bekannt. Mit diesem Messverfahren ist eine präzise Bestimmung von Geometrieparametern, wie Durchmesser oder Wanddicke von in einer Extrusionsvorrichtung extrudierten Rohren möglich. Insbesondere bei einem Vermessen von Rohren kurz nach ihrem Austritt aus der Extrusionsvorrichtung können die ermittelten Geometrieparameter von den tatsächlichen Geometrieparametern im vollständig verfestigten Zustand des Rohrs abweichen. Insbesondere kommt es im Zuge der Verfestigung von extrudierten Rohren regelmäßig zu einem schwerkraftbedingten Absacken der Schmelze nach unten, auch Sagging genannt, wodurch sich im Laufe der Abkühlung die Wanddickenverhältnisse zwischen oberen und unteren Bereichen des Rohrs verändern. Ein Absacken der Schmelze ist nicht vollständig zu verhindern. Es wird versucht, dem Absacken durch bewusstes Einstellen einer ungleichmäßigen Wanddicke am Austritt aus der Extrusionsvorrichtung antizipierend entgegenzuwirken. Dabei besteht das Bedürfnis, das Absacken präzise zu kontrollieren. Messtechnisch ist das Absacken allerdings schwierig zu erfassen.

Aus DE 10 2015 122 205 A1 sind ein Verfahren und eine Terahertz-Messvorrichtung zum Messen einer Schichtdicke und/oder eines Abstandes bekannt, wobei Messungen mit unterschiedlichen optischen Achsen durchgeführt werden, wobei die optische Achse der ausgesandten Terahertzstrahlung während der Messungen oder zwischen den Messungen verstellt wird und eine der mehreren Messungen zur Ermittlung der Schichtdicke herangezogen wird. Durch das Messen mit mehreren Messachsen sollen präzise Messungen möglich sein auch bei Rohrlagefehlern eines zu vermessenden Rohres mit einer Abweichung der Rohrachse von der Symmetrieachse, wie sie aufgrund eines Durchhängens des Rohres bzw. aufgrund von Schwingungen bzw. des nachgiebigen Materials des frisch extrudierten Kunststoffrohrs auftreten können.

DE 20 2018 006 144 U1 beschreibt eine Vorrichtung zum Vermessen eines aus einer Extrusionsvorrichtung austretenden rohrförmigen Strangs, bei der elektromagnetische Strahlung einer Strahlungsquelle von innen auf die Innenseite des rohrförmigen Strangs geleitet wird. Um bei Auftreten von Sagging einen Signalverlust zu verringern bzw. zu verhindern, können mehrere Strahlungssender und/oder Strahlungsempfänger nebeneinander angeordnet werden.

Aus EP 2 752 287 A1 ist eine Vorrichtung zum Messen von in Extrusionslinien hergestellten Industrieprodukten bekannt unter Verwendung von Terahertzstrahlung. Dabei soll eine kontinuierliche Messung erfolgen, auf deren Grundlage Steuerfunktionen für die Extrusionslinie bereitgestellt werden, beispielsweise aufgrund von gemessenen Durchmesserabweichungen.

Aus WO 2019/086081 A1 sind ein Terahertz-Messverfahren und eine Terahertz-Messvorrichtung zur Vermessung von Rohren bekannt, bei der eine Vermessung des Messobjekts mittels eines Hauptsensors erfolgt, indem ein Terahertz-Hauptstrahl entlang einer Hauptachse ausgesandt wird. Weiterhin erfolgt eine Messung entlang einer Zusatzachse, insbesondere einer entlang der Symmetrieachse oder Förderrichtung verstellten bzw. geneigten Zusatzachse. Dabei können mehrere als Terahertz-Sensorarrays ausgebildete Messköpfe um das als Messobjekt zu vermessende Rohr herum angeordnet sein, insbesondere in einer Umfangsrichtung. Hiermit sollen Wanddicken um das Rohr herum vermessen werden können, ohne dass die Messvorrichtung geschwenkt werden muss. Weiterhin sollen auf diese Weise Fehlstellen detektiert werden, wobei eine hohe Wahrscheinlichkeit vorliegen soll, dass reflektierte Strahlung von einem der Zusatzsensoren eines der Terahertz Sensorarrays erfasst werden kann.

J. Hauck et al: "Terahertz inline wall thickness monitoring system for plastic pipe extrusion"(AIP Conference Proceedings, 1. Januar 2014, Seiten 86-89) beschreibt ein Inline-Terahertz-Wanddickenmesssystem für die Kunststoffrohrextrusion. Dabei wird die Wanddicke eines Kunststoffrohrs mit Terahertzstrahlung berührungsfrei und mit hoher Genauigkeit durch Auswertung von Laufzeitdifferenzen am Innen- und Außendurchmesser des Rohrs gemessen. Unter Kenntnis des Brechungsindex des Rohrmaterials kann hieraus die geometrische Schichtdicke berechnet werden.

Ausgehend von dem erläuterten Stand der Technik liegt der Erfindung die Aufgabe zugrunde, ein Verfahren der eingangs genannten Art bereitzustellen, mit dem das Absacken der Schmelze im Vergleich zum Stand der Technik einfacher und präziser erfasst werden kann.

Die Erfindung löst die Aufgabe durch den Gegenstand von Anspruch 1. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass die Wanddicke des Rohrs über den Umfang des Rohrs gemessen und aus den gemessenen Wanddicken ein Wanddickenverlauf über den Umfang des Rohrs erstellt wird, und dass aus der Frequenz des erstellten Wanddickenverlaufs ein Absacken der Schmelze ermittelt wird.

Nach einer Ausgestaltung kann das Absacken der Schmelze weiterhin aus der Amplitude des erstellten Wanddickenverlaufs ermittelt werden.

Das erfindungsgemäß vermessene Rohr kann beispielsweise ein Kunststoffrohr sein. Es wird in einer Extrusionsvorrichtung extrudiert. In Extrusionsvorrichtungen wird bekanntlich Extrusionsmaterial durch Erhitzen geschmolzen und die Schmelze durch eine die Form des zu extrudierenden Gegenstandes abbildende Extruderdüse ausgebracht. Die Extruderdüse weist dazu mindestens eine Austrittsöffnung auf. Das extrudierte Rohr wird in Längsrichtung aus der Extrusionsvorrichtung ausgebracht und weiter in Längsrichtung gefördert. Insbesondere wird das Rohr während der erfindungsgemäßen Messung in Längsrichtung gefördert. Es ist möglich, dass das Rohr bei der erfindungsgemäßen Messung der Wanddicke noch nicht vollständig verfestigt ist, also noch fließfähige Anteile aufweist. Das Rohr kann nach seinem Austritt aus der Extrusionsvorrichtung eine oder mehrere Abkühlstrecken durchlaufen. In derartigen Abkühlstrecken wird wie erläutert zum Beispiel eine Kühlflüssigkeit, wie Wasser, zur Abkühlung auf die Rohraußenfläche gesprüht. Unmittelbar nach Austritt aus der Extrusionsvorrichtung und noch über einen weiteren Bereich der Förderstrecke ist das Rohr noch nicht vollständig verfestigt und besitzt entsprechend noch fließfähige Anteile in Form von Schmelze. Mit Durchlaufen der Abkühlstrecken wird das Rohr sukzessive weiter verfestigt bis zum Erreichen der endgültigen Form. Nach Durchlaufen einer ersten Abkühlstrecke ist das Rohr in der Regel noch nicht vollständig verfestigt, besitzt also noch fließfähige Anteile.

Wie erläutert, kommt es im Zuge des Verfestigens des Rohrs zu einem Absacken der Schmelze nach unten, sogenanntes Sagging. Wie ebenfalls erläutert, lässt sich das Absacken nicht vollständig vermeiden, wird doch die Schmelze unmittelbar im Kopf der Extruderdüse zu einem Rohr geformt. Das Absacken kann antizipiert werden, indem am Austritt aus der Extrusionsvorrichtung das Rohr bewusst im oberen Bereich mit einer größeren Wandstärke ausgebracht wird als im unteren Bereich. Grundsätzlich besteht der Wunsch, die Temperatur der Schmelze im Extruder möglichst hoch einzustellen, da dies gleichbedeutend ist mit einer hohen Ausstoßleistung und entsprechender Produktivität der Extrusionsvorrichtung. Mit der Temperatur der Schmelze steigt andererseits das Risiko eines unkontrollierten Absackens der Schmelze in den unteren Bereich des Rohrs und damit einer unzulässigen Formabweichung des vollständig erkalteten Rohrs.

Am Kopf der Extruderdüse von derartigen Extrusionsvorrichtungen sind häufig Einstellelemente vorgesehen, zum Beispiel plattenförmige Einstellelemente. Derartige Einstellelemente sind in der Regel in der Nähe der mindestens einen Austrittsöffnung der Extruderdüse angeordnet. Mit den Einstellelementen kann an mehreren Stellen über den Umfang des Rohrs die Wanddicke am Austritt aus der Extruderdüse der Extrusionsvorrichtung eingestellt werden. Gängige Extruderdüsen können zum Beispiel 10, 16 oder 20 solcher Einstellelemente aufweisen, die insbesondere im Bereich der inneren Rohrwandung angeordnet sind. Jedes dieser Einstellelemente kann mechanisch justiert werden und/oder ist mit einer Heizung versehen, um in diesem Bereich eine Variabilität der Wanddicke zu ermöglichen. Eine höhere Temperatur des Rohrs führt zu einem stärkeren Fließverhalten. Es wäre auch denkbar, derartigen Einstellelementen mehr oder weniger eines Gleitmittels zuzuführen, um die Wanddicke des Rohrs über den Umfang des Rohrs geeignet einzustellen.

Der Erfindung liegt die überraschende Erkenntnis zugrunde, dass die vorgenannten Einstellelemente zu einer Modulation der Wanddicke über den Umfang des Rohrs führen, die sich auch nach Erkalten der Wandung insbesondere im Inneren des Rohrs noch messtechnisch identifizieren lässt, insbesondere mit einer genauen Wanddickenmessung, beispielsweise einer Terahertzstrahlung-Wanddickenmessung, wie weiter unten noch näher erläutert. Insbesondere weist der Wanddickenverlauf eine messtechnisch detektierbare Frequenz- und/oder Amplitudenmodulation auf. Die vorliegenden Erfinder gehen davon aus, dass diese Modulation durch die Einstellelemente verursacht wird. Der Wanddickenverlauf kann insbesondere entsprechend einer periodischen Funktion, wie einer Kosinus- oder Sinusfunktion moduliert sein. Die Amplitude der Modulation der Wanddicke ist zwar sehr gering. Beispielsweise bei einer mittleren Wanddicke von etwa 10 mm beträgt die Amplitude der Modulation der Wanddicke etwa 10 µm, entsprechend etwa 0,1 %. Mit entsprechend präzisen Wanddicken-Messverfahren kann die Modulation dennoch zuverlässig erkannt werden.

Der Erfindung liegt weiter die Erkenntnis zugrunde, dass sich die Frequenz- und/oder Amplitudenmodulation des Wanddickenverlaufs abhängig von einem Absacken der Schmelze verändert. Sofern beispielsweise unmittelbar am Austritt aus einer Extruderdüse der Extrusionsvorrichtung ein periodischer Wanddickenverlauf mit über den Umfang des Rohrs gleicher Frequenz und einer bestimmten Amplitude vorliegt, können sich im Zuge eines während des Erkaltens des Rohrs erfolgenden Absackens der Schmelze sowohl die Frequenz als auch die Amplitude des Wanddickenverlaufs verändern. Durch das Absacken der Schmelze kommt es im unteren Bereich des Rohrs sozusagen zu einer Stauchung des Wanddickenverlaufs, also einer größeren Frequenz der Modulation des Wanddickenverlaufs. Darüber hinaus kommt es im Zuge des Erkaltens des Rohrs auch zu einer Verringerung der Modulationsamplitude des Wanddickenverlaufs. Es wird vermutet, dass der Grund dafür darin liegt, dass die Modulation der zunächst fast noch vollständig vorliegenden Schmelze durch die insbesondere in Abkühlstrecken außen beginnende Verfestigung des Rohrmaterials zunächst mit der ursprünglichen Phase erstarrt, während der noch flüssig vorliegende Schmelzeanteil schwerkraftbedingt nach unten absackt. Hierdurch kommt es vermutlich zu einer entsprechenden Amplitudenverringerung des Wanddickenverlaufs.

Auf dieser Grundlage ist es Lehre der Erfindung, anhand einer Auswertung der Frequenz und/oder der Amplitude des über den Umfang gemessenen Wanddickenverlaufs des Rohrs den Grad des Absackens der Schmelze von oben nach unten zu erfassen. Erfindungsgemäß ist dies in gegenüber dem Stand der Technik einfacherer und präziserer Weise möglich. Natürlich ist es nicht zwingend, beispielsweise die Frequenz des Wanddickenverlaufs direkt zu bestimmen bzw. auszuwerten. Es ist zum Beispiel auch möglich, eine durch die Frequenz bestimmte Größe, wie zum Beispiel eine Wellenlänge oder eine Phase bzw. eine Phasenverschiebung des Wanddickenverlaufs, zu bestimmen und für die Auswertung heranzuziehen. Entsprechendes gilt für die Amplitude.

Erfindungsgemäß wird somit die Wanddicke des Rohrs über den Umfang des Rohrs gemessen. Die Wanddicke kann dabei kontinuierlich oder in diskreten Umfangsabständen über den Umfang des Rohrs gemessen werden. Sie wird vorzugsweise über den gesamten Umfang des Rohrs gemessen, also einen Winkelbereich von 360°. Es ist aber auch denkbar, dass die Wanddicke nur über ein Teil des Gesamtumfangs gemessen wird, insbesondere einen für das Absacken der Schmelze charakteristischen Teil, wie ein oberes oder unteres Viertel, oder eine obere oder untere Hälfte des Umfangs, wo sich ein Absacken der Schmelze in der Frequenz und/oder Amplitude des Wanddickenverlaufs auswirkt. Aus den gemessenen Wanddicken wird ein Wanddickenverlauf über den Umfang des Rohrs erstellt, also eine die Wanddicke über den Umfang darstellende Kurve. Sofern die Wanddicke nicht kontinuierlich, sondern in diskreten Abständen über den Umfang gemessen wird, kann zwischen den Messpunkten interpoliert werden, um die den Wanddickenverlauf darstellende Kurve zu erstellen. Anhand einer Auswertung der Frequenz und/oder der Amplitude des erstellten Wanddickenverlaufs kann ein Absacken der Schmelze präzise messtechnisch ermittelt werden.

Wie erläutert, kann eine Frequenz- und/oder Amplitudenmodulation des Wanddickenverlaufs insbesondere durch Einstellelemente für die Wanddicke am Ausgang der Extrusionsvorrichtung verursacht sein. In diesem Fall kann am Ausgang einer Extrusionsdüse der Extrusionsvorrichtung zum Beispiel ein Wanddickenverlauf mit einer periodischen Amplitudenmodulation vorliegen. Dieser Wanddickenverlauf verändert sich dann entsprechend einem Absacken der Schmelze, was erfindungsgemäß gemessen und ausgewertet wird. Die Erfindung ist aber auch bei Extrusionsvorrichtungen anwendbar, die andere Mittel zur Festlegung der Wanddicke aufweisen, insbesondere keine derartigen Einstellelemente. Es ist dann möglich, eine durch ein Absacken der Schmelze verursachte Veränderung anderer, am Ausgang der Extrusionsvorrichtung vorliegender charakteristischer Wanddickenschwankungen auszuwerten. Solche Wanddickenschwankungen können erfindungsgemäß auch gezielt eingebracht werden. Zum Beispiel wäre es denkbar, durch geeignete Einstellung der Wanddicke am Ausgang der Extrusionsvorrichtung einen definierten Umfangsabschnitt mit einer vergrößerten oder auch verkleinerten Wanddicke auszubilden. Dazu kann am Ausgang der Extrusionsvorrichtung mindestens ein entsprechendes Markierelement vorgesehen sein, das die vergrößerte oder verkleinerte Wanddicke verursacht. Bei einem Absacken der Schmelze kommt es dann zu einer messtechnisch identifizierbaren Veränderung des Wanddickenverlaufs im Bereich der vergrößerten oder verkleinerten Wanddicke, zum Beispiel könnte es zu einer Vergrößerung oder einer Verkleinerung der Breite des in seiner Wanddicke vergrößerten oder verkleinerten Wandabschnitts kommen. Es kommt also zu einer Amplitudenveränderung in dem erfindungsgemäß gemessenen und erstellten Wanddickenverlauf. Hieraus kann dann wiederum auf das Absacken der Schmelze geschlossen werden.

Allgemein gesprochen, kann die Extrusionsvorrichtung an ihrem Ausgang mindestens ein Element aufweisen, das eine charakteristische Eigenschaft der Wanddicke verursacht, die in dem erfindungsgemäß erstellten Wanddickenverlauf identifiziert werden kann bzw. identifiziert wird.

Nach einer Ausgestaltung kann aus einem Vergleich des erstellten Wanddickenverlaufs mit einem Referenzwanddickenverlauf auf ein Absacken der Schmelze geschlossen werden. Insbesondere kann aus einem Vergleich der Frequenz und/oder der Amplitude des erstellten Wanddickenverlaufs mit der Frequenz und/oder der Amplitude des Referenzwanddickenverlaufs auf ein Absacken der Schmelze geschlossen werden. Der Referenzwanddickenverlauf kann durch eine Messung oder theoretisch, insbesondere rechnerisch ermittelt werden. Der Referenzwanddickenverlauf kann insbesondere für den gleichen Umfangsabschnitt vorliegen, wie der erstellte Wanddickenverlauf. Sofern der erfindungsgemäß erstellte Wanddickenverlauf über den gesamten Umfang des Rohrs erstellt wird, kann auch der Referenzwanddickenverlauf über den gesamten Umfang des Rohrs vorliegen. Der Vergleich des erstellten Wanddickenverlaufs mit einem Referenzwanddickenverlauf vereinfacht insbesondere die quantitative Ermittlung des Absackens der Schmelze. Die durch das Absacken verursachte Veränderung des Wanddickenverlaufs kann in besonders einfacher Weise festgestellt werden.

In besonders praxisgemäßer Weise kann der Referenzwanddickenverlauf ein periodischer Referenzwanddickenverlauf sein, beispielsweise ein sinus- oder kosinusförmiger Referenzwanddickenverlauf. Ein solcher periodischer Referenzwanddickenverlauf ist unmittelbar am Austritt aus einer Extruderdüse der Extrusionsvorrichtung zu erwarten, jedenfalls bei Vorhandensein und gleichmäßiger Anordnung von die Wanddicke bestimmenden Einstellelementen. Ein solcher periodischer Referenzwanddickenverlauf ist als Ausgangswert für den erfindungsgemäßen Vergleich zur Ermittlung des Absackens besonders geeignet. Insbesondere wenn keine solchen Einstellelemente vorgesehen sind, kann der Referenzwanddickenverlauf aber auch ein anderer Referenzwanddickenverlauf sein, zum Beispiel ein eine gegebenenfalls gezielt eingebrachte charakteristische Wanddickenveränderung abbildender Referenzwanddickenverlauf.

Der Referenzwanddickenverlauf kann entsprechend ein erwarteter oder gemessener Referenzwanddickenverlauf unmittelbar am Ausgang der Extrusionsvorrichtung, insbesondere unmittelbar am Ausgang einer Extruderdüse der Extrusionsvorrichtung, sein. Wie bereits erläutert, kann dort zum Beispiel ein periodischer Verlauf zu erwarten sein, insbesondere mit einer verhältnismäßig großen Amplitude. Weicht der später gemessene Wanddickenverlauf von dem Referenzwanddickenverlauf, zum Beispiel einer Periodizität des Referenzwanddickenverlaufs, ab oder weist eine veränderte, zum Beispiel geringere Amplitude als der Referenzwanddickenverlauf auf, ist dies ein qualitativer und quantitativer Indikator für das Absacken der Schmelze.

Nach einer weiteren Ausgestaltung kann aus dem Vergleich zwischen dem erstellten Wanddickenverlauf und dem Referenzwanddickenverlauf ein Abweichungsverlauf erstellt werden, insbesondere über den Umfang des Rohrs. Dieser Abweichungsverlauf bildet also die Abweichung zwischen dem erstellten Wanddickenverlauf und dem Referenzwanddickenverlauf ab, insbesondere in Form einer Kurve. Der Abweichungsverlauf kann zum Beispiel eine Wanddickenveränderung und/oder eine Phasenveränderung und/oder eine Frequenzveränderung und/oder eine Amplitudenveränderung zwischen dem erstellten Wanddickenverlauf und dem Referenzwanddickenverlauf darstellen. Der Abweichungsverlauf bzw. ein dem Abweichungsverlauf entsprechender Verlauf kann in besonders geeigneter Weise als Eingangsgröße für eine Regelung der Extrusionsvorrichtung und/oder mindestens einer stromab der Extrusionsvorrichtung angeordneten Abkühlstrecke zum Erreichen eines gewünschten Wanddickenverlaufs am Messort und/oder im vollständig verfestigten Zustand des Rohrs verwendet werden.

Die Wanddicke des Rohrs über den Umfang des Rohrs kann stromab einer ersten Abkühlstrecke für das aus der Extrusionvorrichtung kommende Rohr gemessen werden. Insbesondere kann die Messung nach einer ersten Abkühlstrecke und vor einer zweiten Abkühlstrecke erfolgen. Das Rohr ist dann zwar teilweise, insbesondere auf seiner Außenseite, erkaltet und verfestigt, besitzt aber regelmäßig noch fließfähige Schmelzeanteile im Inneren.

Es ist weiter möglich, aus dem ermittelten Absacken der Schmelze ein bis zur vollständigen Verfestigung des Rohrs zu erwartendes weiteres Absacken der Schmelze zu prognostizieren. Dies kann zum Beispiel anhand eines Vergleichs mit einem zuvor ermittelten Wanddickenverlauf für ein vollständig verfestigtes Rohr erfolgen. So können bereits im nicht vollständig verfestigten Zustand des Rohrs zuverlässige Aussagen über die Wanddickengeometrie im vollständig verfestigten Zustand getroffen werden.

Gemäß einer weiteren Ausgestaltung kann auf Grundlage des ermittelten Absackens der Schmelze eine Veränderung mindestens eines Prozessparameters der Extrusionsvorrichtung und/oder mindestens einer stromab der Extrusionsvorrichtung angeordneten Abkühlstrecke identifiziert werden. Das ermittelte Absacken ist somit ein wichtiger Signalgeber, falls unerwartete Veränderungen im Produktionsprozess auftreten, zum Beispiel ein Ausfall oder Temperaturanstieg einer Kühlflüssigkeit für die Extrusionsvorrichtung und/oder einer stromab der Extrusionsvorrichtung angeordneten Abkühlstrecke. Solche unerwarteten Veränderungen im Produktionsprozess können erfindungsgemäß frühzeitig erkannt werden und es kann entsprechend entgegengewirkt werden.

Nach einer weiteren Ausgestaltung kann auf Grundlage des ermittelten Absackens der Schmelze mindestens ein Steuerparameter der Extrusionsvorrichtung und/oder mindestens einer stromab der Extrusionsvorrichtung angeordneten Abkühlstrecke verändert werden. Auf diese Weise lässt sich ein stabiler Produktionsprozess einstellen bzw. auf einen solchen stabilen Produktionsprozesses mit optimalen Prozessbedingungen regeln.

Der mindestens eine Steuerparameter kann gemäß einer besonders praxisgemäßen Ausgestaltung mittels des erstellten Abweichungsverlaufs verändert werden. Der Abweichungsverlauf ist als Regelgröße einer automatisierten Regelung besonders gut geeignet.

Gemäß einer weiteren Ausgestaltung kann der mindestens eine Steuerparameter mittels einer Phasenregelschleife verändert werden. Eine Phasenregelschleife, auch Phase Locked Loop (PLL), ist ein Regelverfahren, bei dem die Phasenlage bzw. Frequenz eines veränderbaren Oszillators über einen geschlossenen Regelkreis beeinflusst wird, sodass die Phasenabweichung zwischen einem äußeren periodischen Referenzsignal und dem Oszillator oder einem daraus abgeleiteten Signal möglichst konstant ist. Die Referenzfrequenz der Phasenregelschleife kann zum Beispiel der Anzahl von Einstellelementen einer Extruderdüse der Extrusionsvorrichtung entsprechen. Mithilfe eines Phasendetektors wird eine Phasenabweichung zwischen dem erstellten Wanddickenverlauf und dem Referenzwanddickenverlauf mit der Referenzfrequenz genutzt, um die Frequenz eines spannungsgesteuerten Oszillators zu regeln, dessen Steuerspannung ein Abbild der Frequenzveränderung darstellt, also insbesondere dem Abweichungsverlauf entspricht. Der Phasendetektor kann als Ausgangssignal zum Beispiel den Abweichungsverlauf zwischen dem gemessenen Wanddickenverlauf und dem Referenzwanddickenverlauf bereitstellen. Mit einer solchen Phasenregelschleife kann im vorliegenden Fall in besonders geeigneter Weise die Veränderung des mindestens einen Steuerparameters erfolgen. Natürlich wären auch andere Verfahren denkbar, zum Beispiel die Verwendung eines Bandpassfilters mit einer schmalen Bandbreite, sodass nur die Modulationsfrequenz passieren kann. Auch die Verwendung eines Frequenzdiskriminators wäre denkbar. Ein Bandpassfilter kann zum Beispiel in Kombination mit einem nachgeschalteten Phasendetektor verwendet werden, wobei der Phasendetektor die Phasen eines durch einen Bandpassfilter gefilterten gemessenen Wanddickenverlaufs und eines Referenzwanddickenverlaufs vergleicht und die Phasendifferenz ausgibt. Die Phasendifferenz kann dann als Grundlage einer Veränderung des mindestens einen Steuerparameters genutzt werden. Auch denkbar wäre die Verwendung eines Bandpassfilters mit einem nachgeschalteten Frequenzdiskriminator, wobei der Frequenzdiskriminator die Frequenzen eines durch einen Bandpassfilter gefilterten gemessenen Wanddickenverlaufs und eines Referenzwanddickenverlaufs vergleicht und die Frequenzdifferenz ausgibt. Diese kann dann wiederum als Grundlage einer Veränderung des mindestens einen Steuerparameters genutzt werden.

Der mindestens eine Steuerparameter kann beispielsweise eine Ausstoßleistung der Extrusionsvorrichtung und/oder eine Schmelzetemperatur in der Extrusionsvorrichtung und/oder eine Temperatur und/oder Position von die Geometrie des Rohrs am Auslass der Extrusionsvorrichtung bestimmenden Einstellelementen der Extrusionsvorrichtung sein.

Nach einer weiteren Ausgestaltung kann vorgesehen sein, dass zur Messung der Wanddicke des Rohrs Terahertzstrahlung auf das Rohr ausgesandt wird, von dem Rohr reflektierte Terahertzstrahlung detektiert wird, und aus der detektierten Terahertzstrahlung, insbesondere der Intensität der detektierten Terahertzstrahlung, die Wanddicke des Rohrs bestimmt wird. Bei dieser Ausgestaltung wird Terahertzstrahlung auf das Rohr ausgesandt. Die Terahertzstrahlung kann teilweise in das Rohr eintreten. Sie wird an (äußeren und gegebenenfalls inneren) Grenzflächen des Rohrs reflektiert und von einem geeigneten Detektor detektiert. Die Frequenz der Terahertzstrahlung kann zum Beispiel in einem Frequenzbereich von 10 GHz bis 3 THz liegen. Es kann sich um sogenannte Millimeterwellen handeln. Ein die Terahertzstrahlung aussendender Sender und ein die reflektierte Terahertzstrahlung empfangener Detektor können im Wesentlichen an demselben Ort angeordnet sein. Sie können zum Beispiel in einen Transceiver integriert sein. Mit Teraherzstrahlung lassen sich Geometrieparameter in zuverlässiger Weise bestimmen, insbesondere auch in schwierigen Prozessumgebungen, in denen optische Systeme, wie Laser, Schwierigkeiten haben. Außerdem bietet dieses Messverfahren eine ausreichende Genauigkeit, um die erfindungsgemäß ausgewertete Frequenz- und/oder Amplitudenmodulation des Wanddickenverlaufs sicher zu erfassen. Eine Bestimmung der Wanddicke mit Terahertzstrahlung ist zum Beispiel beschrieben in WO 2016/139155 A1. Auf diese Druckschrift wird entsprechend Bezug genommen.

Die Terahertzstrahlung kann modulierte Dauerstrich- Terahertzstrahlung sein, insbesondere frequenzmodulierte Dauerstrich- Terahertzstrahlung. Auch kann die Terahertzstrahlung impulsmodulierte Terahertzstrahlung oder phasenmodulierte Terahertzstrahlung sein. Die Frequenzmodulation kann einen Frequenz-Burst oder mehrere Frequenz-Bursts umfassen. Insbesondere kann ein sogenannter Frequenz-Sweep erfolgen, bei dem ein vorgegebener Frequenzbereich ein oder mehrmals durchfahren wird. Als impuls- oder phasenmodulierte Terahertzstrahlung kann zum Beispiel ein sogenanntes Time Domain Reflectometry-Verfahren oder Frequency Domain Reflectometry-Verfahren zum Einsatz kommen. Auch das Versenden mehrerer diskreter Frequenzen anstelle eines Frequenzspektrums ist denkbar.

Die Wanddicke des Rohrs kann aus einer Laufzeitmessung der ausgesandten und von dem Rohr reflektierten Terahertzstrahlung bestimmt werden, wie dies beispielsweise in WO 2016/139155 A1 beschrieben ist.

Nach einer weiteren Ausgestaltung kann vorgesehen sein, dass mindestens ein Sender zum Aussenden der Terahertzstrahlung und mindestens ein Detektor zum Detektieren der ausgesandten und von dem Rohr reflektierten Terahertzstrahlung während des Aussendens und Detektierens der Terahertzstrahlung um die Längsachse des Rohrs gedreht wird, vorzugsweise entlang einer Kreisbahn. Durch das Rotieren bzw. Verschieben eines Paars aus Sender und Detektor, beispielsweise eines Transceivers, können über den Umfang des Rohrs verteilt Werte für die Wanddicke erfasst werden. Natürlich wäre es auch denkbar, mehrere Paare von Sendern und Empfängern über den Umfang des Rohrs verteilt anzuordnen und auf diese Weise mehrere Messwerte über den Umfang zu ermitteln.

Ein Ausführungsbeispiel der Erfindung wird nachfolgend anhand von Figuren näher erläutert. Es zeigen schematisch:
- Figur 1: eine Vorrichtung zur Durchführung des erfindungsgemäßen Verfahrens in einer schematischen Seitenansicht,
- Figur 2: eine geschnittene Teildarstellung der Vorrichtung aus Figur 1,
- Figur 3: eine Querschnittsansicht des in den Figuren 1 und 2 gezeigten Rohrs zur Veranschaulichung eines Absackens von Schmelze, und
- Figur 4: drei Diagramme zur Veranschaulichung des erfindungsgemäßen Verfahrens.

Soweit nichts anderes angegeben ist, bezeichnen in den Figuren gleiche Bezugszeichen gleiche Gegenstände.

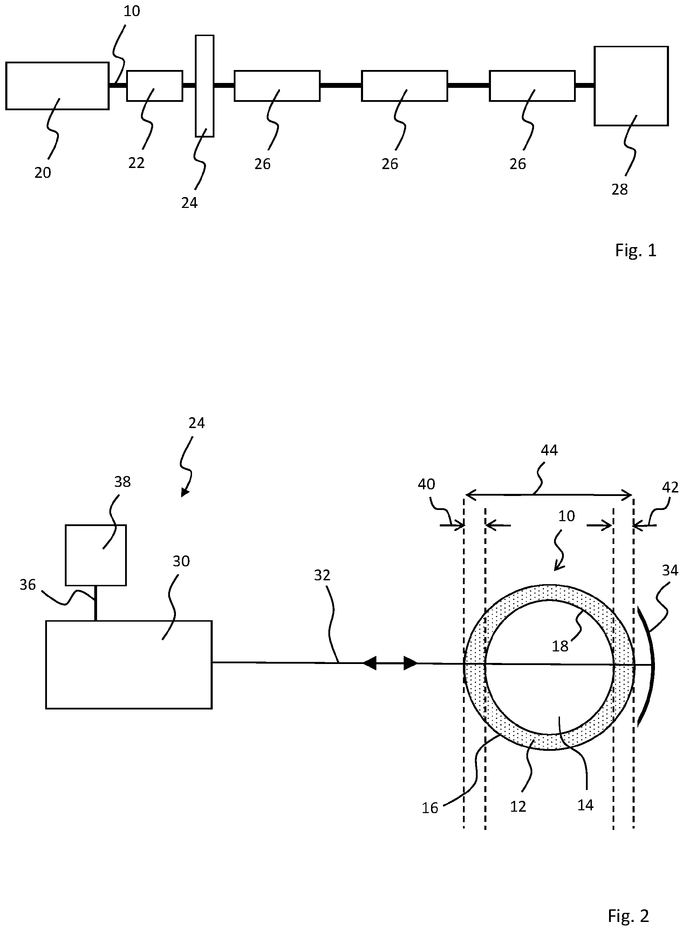

In den Figuren 1 und 2 ist ein Rohr 10, vorliegend ein Kunststoffrohr 10, dargestellt, welches eine Wand 12, einen durch das Rohr 10 begrenzten Hohlraum 14, eine im Querschnitt kreisförmige äußere Oberfläche 16 und eine im Querschnitt ebenfalls kreisförmige innere Oberfläche 18 besitzt, die den Hohlraum 14 begrenzt. Das Kunststoffrohr 10 wird im vorliegenden Beispiel mit Hilfe eines Extruders in einer Extrusionsvorrichtung 20 extrudiert und mittels einer geeigneten Fördereinrichtung entlang seiner Längsachse gefördert, in Figur 1 von links nach rechts. Nach Austritt aus einer Extruderdüse der Extrusionsvorrichtung 20 durchläuft das Rohr 10 zunächst eine erste Abkühlstrecke 22, in der das Rohr 10, welches stark erhitzt und noch nicht vollständig verfestigt, also noch fließfähige Anteile (Schmelze) aufweisend, aus der Extrusionsvorrichtung 20 austritt, abgekühlt. Im weiteren Verlauf durchläuft das Rohr 10 eine Messvorrichtung 24, in der in nachfolgend näher erläuterter Weise die Wanddicke des Rohrs 10 über den Umfang des Rohrs 10 bestimmt wird. Nachfolgend zu der Messvorrichtung 24 durchläuft das Rohr 10 weitere Abkühlstrecken 26, in denen eine weitere Abkühlung erfolgt. Nach vollständiger Verfestigung des Rohrs 10 wird dieses zum Beispiel in einer Ablängungseinrichtung 28 auf vorgegebene Abschnitte abgelängt.

Anhand Figur 2 sollen der Aufbau und die Funktion der Messvorrichtung 24 näher erläutert werden. Die Messvorrichtung 24 umfasst in dem dargestellten Beispiel einen Transceiver 30, in dem ein Sender und ein Detektor für Terahertzstrahlung kombiniert sind. Der Sender sendet Terahertzstrahlung 32 auf das Rohr 10 aus. Die Terahertzstrahlung wird an unterschiedlichen Grenzflächen des Rohrs 10 und an einem dem Transceiver 30 gegenüberliegend angeordneten Reflektor 34 reflektiert und gelangt zurück zu dem Transceiver 30, wo sie durch den Detektor detektiert wird. Der Transceiver 30 ist weiterhin über eine Leitung 36 mit einer Auswerteeinrichtung 38 verbunden. Die von dem Detektor empfangene reflektierte Strahlung erzeugt entsprechende Messsignale, die über die Leitung 36 an die Auswerteeinrichtung 38 weitergegeben werden. Die Auswerteeinrichtung 38 kann auf diese Weise die in Figur 2 eingezeichneten Wanddicken 40, 42 bestimmen, zum Beispiel anhand von Laufzeitmessungen.

Die Messvorrichtung 24 wird dabei während der Messung beispielsweise der Wanddicke 40 um die Längsachse des Rohrs gedreht, wobei kontinuierlich oder in diskreten Abständen die Wanddicke über den vollständigen Umfang des Rohrs 10 gemessen wird und daraus ein Wanddickenverlauf über den Umfang des Rohrs erstellt wird.

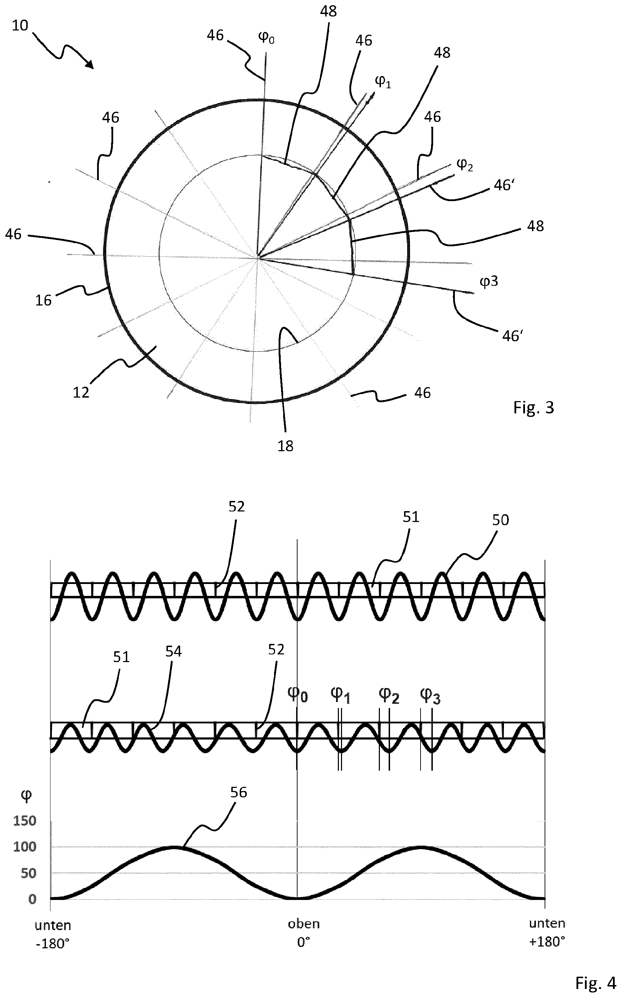

In Figur 3 ist das Rohr 10 in einem Querschnitt dargestellt, wobei durch die in regelmäßigen Winkelabständen eingezeichneten Strahlen 46 Grenzflächen zwischen benachbarten plattenförmigen Einstellelementen der Extruderdüse der Extrusionsvorrichtung 20 veranschaulicht sind. Die Einstellelemente bilden sich im extrudierten Rohr bis zu seiner Erkaltung insbesondere im Bereich der inneren Rohrwandungen in der Wandgeometrie ab. Ohne das Auftreten eines Absackens der Schmelze müssten diese Einstellelemente sich auf der inneren Wandung 18 des Rohrs 10 entsprechend ihren ursprünglichen Abständen gemäß den Strahlen 46 abbilden. Tatsächlich kommt es durch das Absacken der Schmelze im Zuge des Erkaltens (Sagging) zu einem Verschieben der durch die Einstellelemente abgebildeten Bereiche, ausgehend von der mit φ₀ bezeichneten Winkelposition, entsprechend der Oberseite des Rohrs 10 insbesondere zunächst einem Dehnen, wie in Figur 3 durch die Strahlen 46'an den Winkelpositionen φ₁, φ₂ und φ₃ und die Bereiche 48 gekennzeichnet, und nachfolgend einem Stauchen bis zur Unterseite des Rohrs 10.

In Figur 4 ist dieser Effekt für einen Wanddickenverlauf über den Umfang des Rohrs, insbesondere von 0° bis +180° und 0° bis -180°, wobei 0° die Oberseite des Rohrs ist, dargestellt. Aufgetragen ist in Figur 4 in den beiden oberen Diagrammen jeweils die Wanddicke über dem Umfangswinkel. In Figur 4 ist in dem obersten Diagramm ein Referenzwanddickenverlauf 50 gezeigt, im dargestellten Beispiel ein kosinusförmiger Verlauf mit konstanter Frequenz und Amplitude. Der Referenzwanddickenverlauf ist der Verlauf, wie er unmittelbar am Austritt aus der Extruderdüse der Extrusionsvorrichtung 20 zu erwarten ist. Zur Veranschaulichung sind in Figur 4 die Einstellelemente 51 der Extruderdüse und die zwischen ihnen gebildeten Grenzflächen 52 eingezeichnet. Die Frequenz des Referenzwanddickenverlaufs 50 entspricht der Frequenz der gleichmäßig über den Umfang verteilten Einstellelemente 51 bzw. Grenzflächen 52 der Extruderdüse.

Das mittlere Diagramm in Figur 4 zeigt schematisch einen an der in Figur 1 gezeigten Messposition der Messvorrichtung 24 über den Umfang des Rohrs 10 gemessenen Wanddickenverlauf 54. Zu erkennen ist einerseits, dass die Amplitude des gemessenen Wanddickenverlaufs 54 kleiner ist als die Amplitude des Referenzwanddickenverlaufs 50. Außerdem ist zu erkennen, dass es mit zunehmendem Umfangswinkel ausgehend von der obersten Position des Rohrs bei 0° nach unten entsprechend der in Figur 3 gezeigten Verschiebung der Strahlen 46' zu einer Abweichung der Frequenz von dem Referenzwanddickenverlauf 50 kommt, insbesondere zunächst einer Verkleinerung der Frequenz bis zur Winkelposition φ₃ und anschließend einer Vergrößerung der Frequenz bis zur Rohrunterseite bei 180°.

Im untersten Diagramm in Figur 4 ist ein aus einem Vergleich zwischen dem gemessenen Wanddickenverlauf 54 und dem Referenzwanddickenverlauf 50 erstellter Abweichungsverlauf 56 dargestellt. Der Abweichungsverlauf zeigt eine Phasenverschiebung φ des gemessenen Wanddickenverlaufs 54 gegenüber dem Referenzwanddickenverlauf 50. Der Abweichungsverlauf 54 kann den Ausgang eines Phasendetektors bilden, auf dessen Grundlage mindestens ein Steuerparameter der Extrusionsvorrichtung und oder der ersten Abkühlstrecke 22 oder auch der weiteren Abkühlstrecken 26 verändert wird, um am Messort der Messvorrichtung 24 bzw. im vollständig erkalteten Zustand des Rohrs 10 einen gewünschten Wanddickenverlauf, zum Beispiel einen periodischen Wanddickenverlauf, zu erzeugen.

Es ist beispielsweise auch möglich, anhand des am Messort der Messvorrichtung 24 erstellten Wanddickenverlaufs 54, an dem das Rohr 10 regelmäßig noch schmelzfähige Anteile aufweist, ein bis zur vollständigen Verfestigung des Rohrs 10 zu erwartendes weiteres Absacken der Schmelze zu prognostizieren, beispielsweise durch Vergleich mit einem im vollständig verfestigten Zustand eines entsprechenden Rohrs 10 erstellten Wanddickenverlauf.

### Bezugszeichenliste

- 10: Rohr
- 12: Wand
- 14: Hohlraum
- 16: äußere Oberfläche
- 18: innere Wandung
- 20: Extrusionsvorrichtung
- 22, 26: Abkühlstrecke
- 24: Messvorrichtung
- 28: Ablängungseinrichtung
- 30: Transceiver
- 32: Terahertzstrahlung
- 34: Reflektor
- 36: Leitung
- 38: Auswerteeinrichtung
- 40, 42: Wanddicke
- 46, 46': Strahlen
- 48: Bereiche
- 50: Referenzwanddickenverlauf
- 51: Einstellelemente
- 52: Grenzflächen
- 54: Wanddickenverlauf
- 56: Abweichungsverlauf

## Patentansprüche

1. Verfahren zum Ermitteln eines Absackens von Schmelze eines in einer Extrusionsvorrichtung (20) extrudierten Rohrs (10), wobei die Wanddicke (40) des Rohrs (10) über den Umfang des Rohrs (10) gemessen und aus den gemessenen Wanddicken (40) ein Wanddickenverlauf (54) über den Umfang des Rohrs (10) erstellt wird, **dadurch gekennzeichnet, dass** aus der Frequenz des erstellten Wanddickenverlaufs (54) ein Absacken der Schmelze ermittelt wird.

2. Verfahren nach Anspruch 1, **dadurch gekennzeichnet, dass** das Absacken der Schmelze weiterhin aus der Amplitude des erstellten Wanddickenverlaufs (54) ermittelt wird.

3. Verfahren nach einem der Ansprüche 1 oder 2, **dadurch gekennzeichnet, dass** aus einem Vergleich des erstellten Wanddickenverlaufs (54) mit einem Referenzwanddickenverlauf (50) auf ein Absacken der Schmelze geschlossen wird.

4. Verfahren nach einem der vorhergehenden Ansprüche, **dadurch gekennzeichnet, dass** der Referenzwanddickenverlauf (50) ein periodischer Referenzwanddickenverlauf ist.

5. Verfahren nach einem der Ansprüche 3 oder 4, **dadurch gekennzeichnet, dass** der Referenzwanddickenverlauf (50) ein erwarteter oder gemessener Referenzwanddickenverlauf (50) unmittelbar am Ausgang der Extrusionsvorrichtung (20) ist.

6. Verfahren nach einem der Ansprüche 3 bis 5, **dadurch gekennzeichnet, dass** aus dem Vergleich zwischen dem erstellten Wanddickenverlauf (54) und dem Referenzwanddickenverlauf (50) ein Abweichungsverlauf (56) erstellt wird.

7. Verfahren nach einem der vorhergehenden Ansprüche, **dadurch gekennzeichnet, dass** die Wanddicke (40) des Rohrs (10) über den Umfang des Rohrs (10) stromab einer ersten Abkühlstrecke (22) für das aus der Extrusionsvorrichtung (20) kommende Rohr (10) gemessen wird.

8. Verfahren nach einem der vorhergehenden Ansprüche, **dadurch gekennzeichnet, dass** aus dem ermittelten Absacken der Schmelze ein bis zur vollständigen Verfestigung des Rohrs (10) zu erwartendes weiteres Absacken der Schmelze prognostiziert wird.

9. Verfahren nach einem der vorhergehenden Ansprüche, **dadurch gekennzeichnet, dass** auf Grundlage des ermittelten Absackens der Schmelze eine Veränderung mindestens eines Prozessparameters der Extrusionsvorrichtung (20) und/oder mindestens einer stromab der Extrusionsvorrichtung (20) angeordneten Abkühlstrecke (22, 26) identifiziert wird.

10. Verfahren nach einem der vorhergehenden Ansprüche, **dadurch gekennzeichnet, dass** auf Grundlage des ermittelten Absackens der Schmelze mindestens ein Steuerparameter der Extrusionsvorrichtung (20) und/oder mindestens einer stromab der Extrusionsvorrichtung (20) angeordneten Abkühlstrecke (22, 26) verändert wird.

11. Verfahren nach den Ansprüchen 6 und 10, **dadurch gekennzeichnet, dass** der mindestens eine Steuerparameter mittels des erstellten Abweichungsverlaufs (56) verändert wird.

12. Verfahren nach einem der Ansprüche 10 oder 11, **dadurch gekennzeichnet, dass** der mindestens eine Steuerparameter mittels einer Phasenregelschleife verändert wird.

13. Verfahren nach einem der Ansprüche 10 bis 12, **dadurch gekennzeichnet, dass** der mindestens eine Steuerparameter eine Ausstoßleistung der Extrusionsvorrichtung (20) und/oder eine Schmelzetemperatur in der Extrusionsvorrichtung (20) und/oder eine Temperatur und/oder Position von die Geometrie des Rohrs (10) am Auslass der Extrusionsvorrichtung (20) bestimmenden Einstellelementen (51) der Extrusionsvorrichtung (20) ist.

14. Verfahren nach einem der vorhergehenden Ansprüche, **dadurch gekennzeichnet, dass** zur Messung der Wanddicke (40) des Rohrs (10) Terahertzstrahlung (32) über den Umfang des Rohrs (10) auf das Rohr (10) ausgesandt wird, von dem Rohr (10) reflektierte Terahertzstrahlung (32) detektiert wird, und aus der detektierten Terahertzstrahlung (32) die Wanddicke (40) über den Umfang des Rohrs (10) bestimmt wird, wobei vorzugsweise die Terahertzstrahlung (32) modulierte Dauerstrich-Terahertzstrahlung ist, insbesondere frequenzmodulierte Dauerstrich-Terahertzstrahlung und/oder dass die Terahertzstrahlung (32) impulsmodulierte Terahertzstrahlung oder phasenmodulierte Terahertzstrahlung ist.

15. Verfahren nach Anspruch 14, **dadurch gekennzeichnet, dass** die Wanddicke (40) des Rohrs (10) aus einer Laufzeitmessung der ausgesandten und von dem Rohr (10) reflektierten Terahertzstrahlung (32) bestimmt wird.

16. Verfahren nach einem der Ansprüche 14 oder 15, **dadurch gekennzeichnet, dass** mindestens ein Sender zum Aussenden der Terahertzstrahlung (32) und mindestens ein Detektor zum Detektieren der ausgesandten und von dem Rohr (10) reflektierten Terahertzstrahlung (32) während des Aussendens und Detektierens der Terahertzstrahlung um die Längsachse des Rohrs (10) gedreht wird, vorzugsweise entlang einer Kreisbahn.

## Claims

1. A method for determining sagging of molten mass of a tube (10) extruded in an extrusion device (20), wherein the wall thickness (40) of the tube (10) is measured over the circumference of the tube (10) and a wall thickness curve (54) over the circumference of the tube (10) is created from the measured wall thicknesses (40), **characterized in that** sagging of the molten mass is determined from the frequency of the created wall thickness curve (54).

2. The method according to claim 1, **characterized in that** the sagging of the molten mass is further determined from the amplitude of the created wall thickness curve (54).

3. The method according to one of claim 1 or 2, **characterized in that** sagging of the molten mass is concluded from a comparison of the created wall thickness curve (54) with a reference wall thickness curve (50).

4. The method according to one of the preceding claims, **characterized in that** the reference wall thickness curve (50) is a periodic reference wall thickness curve.

5. The method according to one of claims 3 or 4, **characterized in that** the reference wall thickness curve (50) is an expected or measured reference wall thickness curve (50) directly at the outlet of the extrusion device (20).

6. The method according to one of claims 3 to 5, **characterized in that** a deviation curve (56) is created from the comparison between the created wall thickness curve (54) and the reference wall thickness curve (50).

7. The method according to one of the preceding claims, **characterized in that** the wall thickness (40) of the tube (10) over the circumference of the tube (10) is measured downstream of a first cooling section (22) for the tube (10) coming out of the extrusion device (20).

8. The method according to one of the preceding claims, **characterized in that** further sagging of the molten mass to be expected until complete solidification of the tube (10) is predicted from the determined sagging of the molten mass.

9. The method according to one of the preceding claims, **characterized in that** a change in at least one process parameter of the extrusion device (20) and/or of at least one cooling section (22, 26) arranged downstream of the extrusion device (20) is identified on the basis of the determined sagging of the molten mass.

10. The method according to one of the preceding claims, **characterized in that** a control parameter of the extrusion device (20) and/or of at least one cooling section (22, 26) arranged downstream of the extrusion device (20) is changed on the basis of the determined sagging of the molten mass.

11. The method according to claims 6 and 10, **characterized in that** the at least one control parameter is changed by means of the created deviation curve (56).

12. The method according to one of claims 10 or 11, **characterized in that** the at least one control parameter is changed by means of a phase-locked loop.

13. The method according to one of claims 10 to 12, **characterized in that** the at least one control parameter is an output capacity of the extrusion device (20) and/or a melting temperature in the extrusion device (20) and/or a temperature and/or position of adjustment elements (51) of the extrusion device (20) that define the geometry of the tube (10) at the outlet of the extrusion device (20).

14. The method according to one of the preceding claims, **characterized in that**, in order to measure the wall thickness (40) of the tube (10), terahertz radiation (32) is emitted onto the tube (10) over the circumference of the tube (10), terahertz radiation (32) reflected by the tube (10) is detected, and the wall thickness (40) over the circumference of the tube (10) is ascertained from the detected terahertz radiation (32), wherein the terahertz radiation (32) is preferably modulated continuous wave terahertz radiation, in particular frequency-modulated continuous wave terahertz radiation and/or **in that** the terahertz radiation (32) is pulse-modulated terahertz radiation or phase-modulated terahertz radiation.

15. The method according to claim 14, **characterized in that** the wall thickness (40) of the tube (10) is ascertained from a transit time measurement of the emitted terahertz radiation (32) reflected by the tube (10).

16. The method according to one of claims 14 or 15, **characterized in that** at least one transmitter for emitting the terahertz radiation (32) and at least one detector for detecting the emitted terahertz radiation (32) reflected by the tube (10) is rotated about the longitudinal axis of the tube (10), preferably along a circular path, during emission and detection of the terahertz radiation.

## Revendications

1. Procédé de détermination de l'affaissement de masse fondue d'un tube (10) extrudé dans un dispositif d'extrusion (20), dans lequel
l'épaisseur de paroi (40) du tube (10) est mesurée sur la circonférence du tube (10) et une évolution d'épaisseur de paroi (54) est établie sur la circonférence du tube (10) à partir des épaisseur de paroi (40) mesurées, **caractérisé en ce qu'**un affaissement de la masse fondue est déterminé à partir de la fréquence de l'évolution d'épaisseur de paroi (54) établie.

2. Procédé selon la revendication 1, **caractérisé en ce que** l'affaissement de la masse fondue est également déterminé à partir de l'amplitude de l'évolution d'épaisseur de paroi (54) établie.

3. Procédé selon l'une des revendications 1 ou 2, **caractérisé en ce qu'**un affaissement de la masse fondue est supposé à partir d'une comparaison de l'évolution d'épaisseur de paroi (54) établie avec une évolution d'épaisseur de paroi de référence (50).

4. Procédé selon l'une des revendications précédentes, **caractérisé en ce que** l'évolution d'épaisseur de paroi de référence (50) est une évolution d'épaisseur de paroi de référence périodique.

5. Procédé selon l'une des revendications 3 ou 4, **caractérisé en ce que** l'évolution d'épaisseur de paroi de référence (50) est une évolution d'épaisseur de paroi de référence (50) attendue ou mesurée directement à la sortie du dispositif d'extrusion (20).

6. Procédé selon l'une des revendications 3 à 5, **caractérisé en ce qu'**une évolution des déviations (56) est établie à partir de la comparaison entre l'évolution d'épaisseur de paroi (54) établie et l'évolution d'épaisseur de paroi de référence (50).

7. Procédé selon l'une des revendications précédentes, **caractérisé en ce que** l'épaisseur de paroi (40) du tube (10) est mesurée sur la circonférence du tube (10) en aval d'un premier trajet de refroidissement (22) pour le tube (10) sortant du dispositif d'extrusion (20).

8. Procédé selon l'une des revendications précédentes, **caractérisé en ce qu'**un affaissement supplémentaire attendu de la masse fondue jusqu'à la solidification complète du tube (10) est prévu à partir de l'affaissement déterminé de la masse fondue.

9. Procédé selon l'une des revendications précédentes, **caractérisé en ce qu'**une modification d'au moins un paramètre de processus du dispositif d'extrusion (20) et/ou d'au moins un trajet de refroidissement (22, 26) disposé en aval du dispositif d'extrusion (20) est identifiée sur la base de l'affaissement déterminé de la masse fondue.

10. Procédé selon l'une des revendications précédentes, **caractérisé en ce qu'**au moins un paramètre de commande du dispositif d'extrusion (20) et/ou d'au moins un trajet de refroidissement (22, 26) disposé en aval du dispositif d'extrusion (20) est modifié sur la base de l'affaissement déterminé de la masse fondue.

11. Procédé selon les revendications 6 et 10, **caractérisé en ce que** l'au moins un paramètre de commande est modifié au moyen de l'évolution des déviations (56) établie.

12. Procédé selon l'une des revendications 10 ou 11, **caractérisé en ce que** l'au moins un paramètre de commande est modifié au moyen d'une boucle à verrouillage de phase.

13. Procédé selon l'une des revendications 10 à 12, **caractérisé en ce que** l'au moins un paramètre de commande est un rendement du dispositif d'extrusion (20) et/ou une température de masse fondue dans le dispositif d'extrusion (20) et/ou une température et/ou une position d'éléments de réglage (51) du dispositif d'extrusion (20) déterminant la géométrie du tube (10) au niveau de la sortie du dispositif d'extrusion (20).

14. Procédé selon l'une des revendications précédentes, **caractérisé en ce que** pour la mesure de l' épaisseur de paroi (40) du tube (10), un rayonnement térahertz (32) est émis vers le tube (10) sur la circonférence du tube (10), un rayonnement térahertz (32) réfléchi par le tube (10) est détecté, et l'épaisseur de paroi (40) sur la circonférence du tube (10) est définie à partir du rayonnement térahertz (32) détecté, dans lequel le rayonnement térahertz (32) est de préférence un rayonnement térahertz à onde continue modulé, en particulier un rayonnement térahertz à onde continue modulé en fréquence, et/ou **en ce que** le rayonnement térahertz (32) est un rayonnement térahertz modulé par impulsions ou un rayonnement térahertz modulé en phase.

15. Procédé selon la revendication 14, **caractérisé en ce que** l'épaisseur de paroi (40) du tube (10) est déterminée à partir d'une mesure du temps de propagation du rayonnement térahertz (32) émis et réfléchi par le tube (10).

16. Procédé selon l'une des revendications 14 ou 15, **caractérisé en ce qu'**au moins un émetteur destiné à émettre le rayonnement térahertz (32) et au moins un détecteur destiné à détecter le rayonnement térahertz (32) émis et réfléchi par le tube (10) tournent autour de l'axe longitudinal du tube (10) pendant l'émission et la détection du rayonnement térahertz, de préférence le long d'une voie circulaire.
